# EUROPÄISCHE PATENTSCHRIFT

(11) **EP 1 205 411 B1**
(45) Veröffentlichungstag und Bekanntmachung des Hinweises auf die Patenterteilung: **05.03.2003**
(21) Anmeldenummer: 00250376.1
(22) Anmeldetag: 13.11.2000
(51) Int. Cl.: B65G 49/04, C25D 17/28, B08B 3/04

(54) **Modulare Vorrichtung zum Oberflächenbehandeln von Behandlungsgut in Form von Einzelheiten**
Modular device for surface treatement of individual articles
Dispositif modulaire pour le traitement en surface d'objets individuels

(43) Veröffentlichungstag der Anmeldung: 15.05.2002
(73) Patentinhaber: Steckelbach, Wilhelm, 73265 Dettingen/T (DE); Mühlberger, Volker, 71277 Ruthesheim (DE)
(72) Erfinder: Steckelbach, Wilhelm, 73265 Dettingen/T (DE); Mühlberger, Volker, 71277 Ruthesheim (DE)
(74) Vertreter: Meys, Hildegard, Dr.rer.nat.

(56) Entgegenhaltungen:
- EP-A- 0 971 051
- FR-A- 700 918
- US-A- 4 089 339
- US-A- 4 233 084
- US-A- 5 660 642

## Beschreibung

Die Erfindung betrifft eine Vorrichtung zum Oberflächenbehandeln von Behandlungsgut in Form von Einzelteilen, insbesondere Kleinteilen, mit Behandlungsflüssigkeit als Durchlaufanlage.

In der US-A-4 089 339 ist eine solche fest konstruierte Vorrichtung beschrieben.

Solche Anlagen, die bekanntermassen für die Reinigung, Beschichtung, Vor- und Nachbehandlung von speziell chemischen, elektrochemischen und physikalischen Oberflächenbehandlungen von Einzelteilen, Werkstücken aller Art, mit metallischen und/oder nichtmetallischen Oberflächen, eingesetzt werden, sind aus wirtschaftlichen Gründen heutzutage Grossanlagen mit dementsprechend grosser Volumenvorlage an chemischen Substanzen. Nachteil dieser Grossanlagen ist das grosse Volumen, der grosse Platzbedarf und die nicht optimale Recyclingmöglichkeit, unabhängig von unerwünscht hohem Spülwasserverbrauch und Energiebedarf und den daraus unter anderem resultierenden zu hohen Produktionskosten. Aus heutiger Sicht ist es zwecks Umweltschutzoptimierung und aus Kostengründen erforderlich, Produktionsanlagen für beispielsweise korrosionsfeste Massenbeschichtung von Stahl- und Zinkdruckgussteilen in kleinen Kompakteinheiten mit geringer Volumenvorlage und optimaler Recyclingtechnik anzubieten.

Der Erfindung liegt die Aufgabe zugrunde, eine solche umfassende Lösung mit einer Produktionsanlage in modularer Kompakteinheit zu schaffen, die bei vollautomatischer Massenproduktion mit geringst möglichem Volumen an Prozesslösung und geringem Platzbedarf auskommt, wobei ein totales Recycling der eingesetzten Prozesslösung, Spülwasser und Abluft bei gleichzeitiger starker Reduzierung der Energieund Produktionskosten ermöglicht wird, bei gleichzeitiger hoher Durchsatzrate des Behandlungsgutes.
Dabei geht die Erfindung aus von dem im Oberbegriff des Anspruchs 1 angegebenen Stand der Technik.

Die Aufgabe wird gemäss der Erfindung durch die kennzeichnenden Merkmale des Anspruchs 1 gelöst, wobei vorteilhafte und zweckmässige Ausgestaltungen und weitere Merkmale der Erfindung in den Unteransprüchen 2 bis 9 beansprucht sind.

Die Erfindung ermöglicht eine vollautomatische Massenproduktion mittels modularer Kompakteinheiten, die je nach Fertigungsart zusammengestellt und zu einer vollautomatischen Produktionslinie aneinandergereiht werden können. Die Anordnung mit einer oder mehreren erfindungsgemässen Kompakteinheiten kann jeder Behandlungsart angepasst zusammengesetzt und jederzeit wieder geändert werden. Erfindungsgemässe modulare Kompakteinheiten lassen sich beispielsweise für Reinigung mit oder ohne Spritzspülung, KunststoffBeschichtung mit oder ohne Spritzspülung, elektrochemische Oberflächenbehandlungen, Korrosionsbeschichtung und dergleichen Fertigungsvorgänge vorteilhaft benutzen.

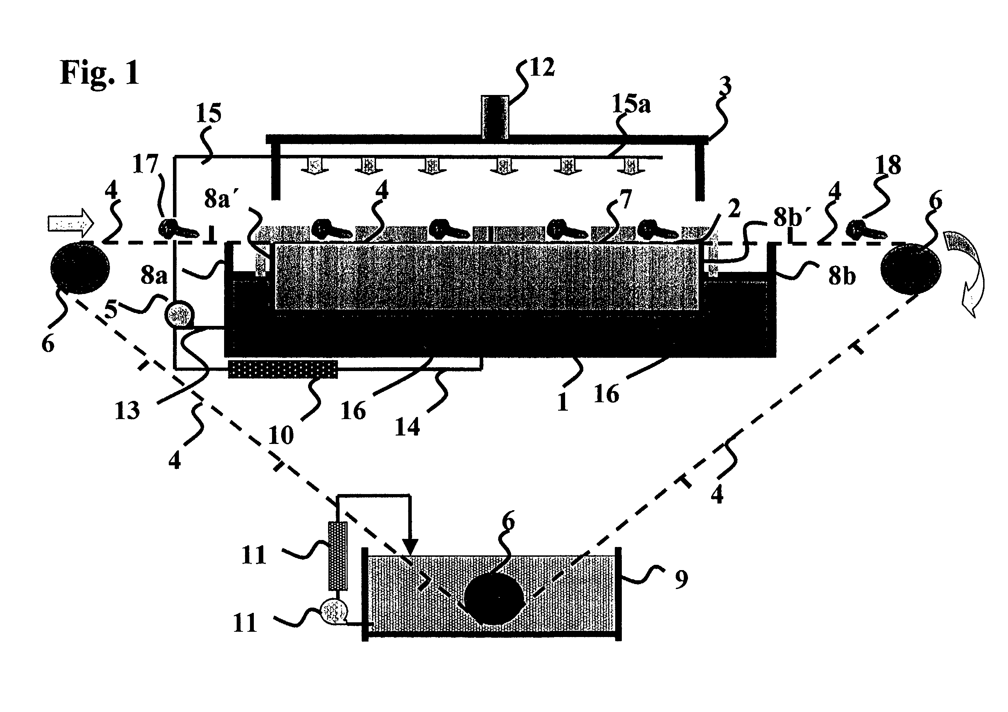

Nachstehend wird die Erfindung anhand eines Ausführungsbeispiels, das in der beiliegenden Zeichnung in Form einer schematischen Abbildung veranschaulicht ist, näher erläutert und in der Figur 1 als modulare Kompakteinheit dargestellt.

Die in der Figur 1 veranschaulichte erfindungsgemässe modulare Kompakteinheit weist einen Vorlagebehälter 1 auf, der die Behandlungsflüssigkeit für das Behandlungsgut 17 enthält. Das Behandlungsgut 17 ist in Form von Schrauben-Kleinteilen veranschaulicht. Das Behandlungsgut 17 wird mittels eines Endlostransportbandes 4 transportiert. Das Endlostransportband 4 läuft, das Behandlungsgut 17 tragend und gesteuert durch eine als Rollenumkehreinheit 6 ausgebildete Leiteinrichtung, im Kreislauf oberhalb der Oberfläche des oben offenen Behälters 1 von dessen Seitenkante 8a zu dessen Seitenkante 8b und wird dort mittels der Rollenumkehreinheit 6 umgelenkt und unterhalb des Behälters 1 im Kreislauf von der Behälterseitenkante 8b, an der das behandelte Gut als Fertigware 18 von dem Transportband 4 abfällt, zur Behälterseitenkante 8a zurückgeführt. Die Fertigware 18 kann in an sich bekannter Weise abgezogen, zum Beispiel in (nicht gezeigten) Transportbehältnissen gesammelt und dem vorgesehenen Verwendungszweck zugeführt werden. Es kann gewünschtenfalls irgend eine dem Fachmann bekannte Trocknungsbehandlung zwischengeschaltet werden.

Innerhalb des Vorratsbehälters 1 ist ein Arbeitsbehälter 2 vorhanden, der so dimensioniert und jeweils innerhalb des Vorratsbehälters 1 so angeordnet ist, dass seine Seitenkanten 8a' und 8b' sich in einigem Abstand nach innen und parallel gelegen sind zu den Seitenkanten 8a und 8b des Vorratsbehälters 1 befinden. Innerhalb des Arbeitsbehälters 2 sind für die Behandlung des Behandlungsgutes 17 benötigte Behandlungsgerätschaften 16 angeordnet. Wenn man beispielsweise die erfindungsgemässe modulare Kompakteinheit als Reinigungsmodul einsetzt, ist als Behandlungsgerätschaft 16 zweckmässig eine Ultraschalleinrichtung vorhanden. Wenn man eine modulare Kompakteinheit als Beschichtungsmodul einsetzt, ist als Behandlungsgerätschaft zweckmässig eine Heizeinrichtung vorhanden, wenn chemisch beschichtet wird; die Behandlungsgerätschaft 16 ist eine Anode, wenn elektrochemisch beschichtet wird.

Um das Behandlungsgut 17 während des Transports auf dem Band 4 zu bewegen, ist eine Vibrationseinheit 7 angeordnet, wodurch das Transportband 4 in Schwingungen versetzt wird. Durch solche Bewegung lässt sich der Behandlungsvorgang optimieren. Es ist weiterhin über dem mit dem Behandlungsgut 17 bestückten Transportband 4 oberhalb der Behälter 1 und 2 eine Haube 3 vorhanden, die zwecks Abzug von Abluft eine Abluft-Abführeinrichtung 12 aufweisen kann. Für Trocknungsbehandlung kann oberhalb der Behälter 1 und 2 und des darüber laufenden Endlostransportbandes 4 sowie dem darauf befindlichen Behandlungsgut 17 eine Infrarot-Einheit angeordnet sein.

Die Behandlungsflüssigkeit wird über Abführungen 13 aus dem Vorratsbehälter 1 abgezogen und mittels Umpumpeinrichtung 5 über mit Recyclingeinrichtung 10 bestückte Unterfluteinrichtung 14 und Oberfluteinrichtung 15 dem Arbeitsbehälter 2 zugeführt. Sie kontaktiert und umströmt dabei das auf dem Endlostransportband (Badewanneneffekt) direkt oberhalb der Oberfläche des mit der Behandlungsflüssigkeit gefüllten Arbeitsbehälters 2 geführte Behandlungsgut 17, wobei der Behandlungsvorgang effektiv abläuft. Aus dem Arbeitsbehälter 2 fliesst die Behandlungsflüssigkeit mit Überlauf über die Seitenkanten des Behälters 2 in den Vorratsbehälter 1 zurück. (Hier nicht gezeigte) Zuleitungen für Ergänzungslösungen zu bzw. Abzugsleitungen für verbrauchte Behandlungsflüssigkeit aus dem Vorratsbehälter 1 können in an sich bekannter Weise angeordnet sein. Die Abluft-Abführeinrichtung 12, die dem Dunstabzug dient, kann mit (nicht gezeigten) Materialaufbereitungs- und -rückführ-Einrichtungen verbunden sein.

In dem mittels der Rollenumkehr-Leiteinrichtung 6 gelenkten Kreislauf des Endlostransportbandes 4 ist ein Behälter 9 unterhalb des Vorratsbehälters 1 angeordnet, der alsBandreinigungsabteil für das Endlostransportband 4 dient. Er enthält ein entsprechendes Reinigungsmedium, das mittels einer Umpump- und Recyclingeinrichtung 11 zirkuliert werden kann und dem (hier nicht gezeigte) Zulauf für Ergänzungsflüssigkeit und Ablauf für verbrauchte Flüssigkeit und eventuell Schmutzabzug zugeordnet sein können. Damit wird sichergestellt, dass etwa auf dem Endlostransportband 4 abgesetzte, beim Behandlungsvorgang des Behandlungsgutes 17 von diesem entfernte Schmutzteile und Flüssigkeitsreste bei der Kreislaufführung des Transportbandes nicht ihrerseits im Kreislauf mitgeführt werden.

Man kann für elektrochemische Behandlung das Endlostransportband mit Stromübertragungskontakten bestücken. Man kann darauf Aufkantungen vorsehen, die den Badewanneneffekt beim Überströmtwerden des Behandlungsgutes mit der Behandlungsflüssigkeit beim Behandlungsvorgang optimieren. Das Transportband kann mit Durchbrüchen versehen sein, in Art eines Siebbandes.

Erfindungsgemässe modulare Kompakteinheiten können nach Belieben als Kombinations-Einheiten eingesetzt werden. Es lassen sich so praktisch jedwede Behandlungsarten in einer raumsparenden, materialsparenden und handhabungseinfachen Gesamteinrichtung integriert durchführen. Wenn in Reihe geschaltete erfindungsgemässe Kompaktmodule auf einer gleichen Ebene angeordnet sind, kann ein einzelnes gemeinsames Endlostransportband vorhanden sein, das über die Oberfläche der Vorratsbehälter und der darin angeordneten Arbeitsbehälter mittels einer Umlenkeinrichtung - wie zuvor für eine einzelne Kompakteinheit beschrieben - im Kreislauf geführt ist.

Wenn in Reihe geschaltete erfindungsgemässe modulare Kompakteinheiten auf verschiedenen Ebenen angeordnet sind, muss für jedes einzelne Kompaktmodul ein jeweils gesondertes Endlostransportband, wie in Figur 1 dargestellt und dazu beschrieben, angeordnet sein. Da das Endlostransportband stufenlos oder taktgebunden angetrieben werden kann, lässt sich die Behandlung des Behandlungsgutes mittels erfindungsgemässen modularen Kompakteinheiten kontinuierlich oder diskontinuierlich durchführen. Die erfindungsgemässe Vorrichtung lässt sich als vollautomatische Produktlinie fahren, kann an jede Art der Bahandlung angepasst und ohne grösseren Aufwand gewünschtenfalls geändert werden.

Erfindungsgemässe modulare Kompakteinheiten können aus beliebigem für diese Zwecke bekanntem Material gefertigt werden; Kunststoffmaterial ist vorzüglich geeignet,beispielsweise Polyvinylchlorid, Polypropylen und dergleichen. Auch stahlgummierte Materialien lassen sich zweckmässig einsetzen.

Erfindungsgemässe modulare Kompakteinheiten können den gewünschten Produktionsergebnissen angepasst zusammengestellt konzipiert und den zu behandelnden Oberflächen des Behandlungsgutes angepasst gefahren werden. Es sind damit insbesondere auch korrosionsfeste Beschichtungen von metallischen Oberflächen mit geringster Auflage im Sandwichverfahren möglich.

Eine erfindungsgemässe Vorrichtung kann als modulare Kompakteinheit durch Aneinanderreihung von beliebig mehreren Einzel-Kompaktmodulan relativ beliebig aufgebaut zusammengesetzt mit dem Fachmann bekannter Beladung, Entnahme und gewünschtenfalls Trocknung zu einer vollautomatischen Prozessanlage unterschiedlichster Art zusammengebaut und gefahren werden.

### Bezugszeichenliste

- 1: Vorlagebehälter
- 2: Arbeitsbehälter
- 3: Haube
- 4: Endlostransportband
- 5: Umpumpeinrichtung
- 6: Rollenumkehreinrichtung (Leiteinrichtung für das Band 4)
- 7: Vibrationseinrichtung
8a Seitenkante des Vorlagebehälters 1
8b Seitenkante des Vorlagebehälters 1
8a' Seitenkante des Arbeitsbehälters 2
8b' Seitenkante des Arbeitsbehälters 2
- 9: Behältnis (für die Reinigung des Bandes 4)
- 10: Recyclingeinrichtung (am Vorlagebehälter 1)
- 11: Recyclingeinrichtung (am Behältnis 9)
- 12: Abluft-Abführeinheit
- 13: Abführung von Behandlungsflüssigkeit aus Vorratsbehälter 1
- 14: Unterfluteinrichtung
- 15: Oberfluteinrichtung
- 15a: Sprüheinrichtung
- 16: Behandlungsgerätschaft
- 17: Behandlungsgut
- 18: Fertigware

## Patentansprüche

1. Modulare Vorrichtung zum Oberflächenbehandeln von Behandlungsgut (17) in Form von Einzelteilen, insbesondere Kleinteilen, mit Behandlungsflüssigkeit, als Durchlaufanlage, **gekennzeichnet durch** in Reihe anordbare modulare Kompakteinheiten, bestehend aus
Vorlagebehälter (1) für Behandlungsflüssigkeit,
innerhalb des Vorlagebehälters (1) angeordnetem Arbeitsbehälter (2),
oberhalb des Vorlagebehälters (1) und direkt oberhalb des Arbeitsbehälters (2) laufendem Endlostransportband (4) für das Behandlungsgut (17),
oberhalb und/oder unterhalb des Endlostransportbandes (4) angeordneter Zuführeinrichtung(en) (14) (15) für Behandlungsflüssigkeit zum Arbeitsbehälter (2), sowie
einer Leiteinrichtung (6) zur Leitung des Endlostransportbandes (4) im Kreislauf zu und oberhalb von Vorlagebehälter (1) und Arbeitsbehälter (2) und zurück.

2. Vorrichtung nach Anspruch 1, **dadurch gekennzeichnet, dass** in dem Arbeitsbehälter (2) Behandlungsgerätschaft (16) für das Behandlungsgut (17) angeordnet ist.

3. Vorrichtung nach den Ansprüchen 1 und 2, **dadurch gekennzeichnet, dass** die Leiteinrichtung für das Endlostransportband (4) als Rollenumkehreinrichtung (6) gestaltet ist.

4. Vorrichtung nach den Ansprüchen 1 bis 3, **dadurch gekennzeichnet, dass** eine Vibrationseinrichtung (7) vorhanden ist, die das Endlostransportband (4) oberhalb des Arbeitsbehälters (2) in Schwingung versetzt.

5. Vorrichtung nach den Ansprüchen 1 bis 4, **dadurch gekennzeichnet, dass** über dem Arbeitsbehälter (2) oberhalb des Endlostransportbandes (4) eine Sprüheinrichtung (15a) angeordnet ist.

6. Vorrichtung nach den Ansprüchen 1 bis 5, **dadurch gekennzeichnet, dass** eine Abluft-Abführeinrichtung (12) oberhalb des Vorlagebehälters (1) und des Arbeitsbehälters (2) angeordnet ist.

7. Vorrichtung nach den Ansprüchen 1 bis 6, **dadurch gekennzeichnet, dass** eine über dem Vorlagebehälter (1) oberhalb des Endlostransportbandes (4) angeordnete Haube (3) vorhanden ist.

8. Vorrichtung nach den Ansprüchen 1 bis 7, **dadurch gekennzeichnet, dass** ein Behältnis (9) für Transportband-Reinigung in dem Kreislauf des Endlostransportbandes (4) angeordnet ist.

9. Vorrichtung nach den Ansprüchen 1 bis 8, **dadurch gekennzeichnet, dass** der Vorlagebehälter (1) mit Umpumpeinrichtung (5) und Recyclingeinrichtung (10) ausgestaltet ist.

## Claims

1. Modular device for surface treatment of material (17) to be treated consisting of individual parts, in particular small parts, with a treatment liquid, said device being shaped as a continuous operation installation and **characterised by** compact modular units which can be arranged in series and consist of
a storage container (1) for treatment liquid,
a working container (2) arranged within the storage container (1),
an endless conveyor belt (4) for the material (17) to be treated running above the storage container (1) and directly above the working container (2),
feeding units (14, 15) arranged above and/or below the endless conveyor belt (4) for the supply of treatment fluid to the working container (2), and
a guiding device (6) for guiding the endless conveyor belt (4) in a circulatory manner towards and above the storage container (1) and the working container (2) and back again.

2. Device according to claim 1, **characterised in that** treating equipment (16) for the material (17) to be treated is arranged in the working container (2).

3. Device according to claims 1 and 2, **characterised in that** the guiding device for the endless conveyor belt (4) is formed as a deflection roller device (6).

4. Device according to claims 1 to 3, **characterised in that** a vibrating device (7) is provided for the purpose of oscillating the endless conveyor belt (4) above the working container (2).

5. Device according to claims 1 to 4, **characterised in that** a spray device (15a) is arranged above the working container (2) and above the endless conveyor belt (4)

6. Device according to claims 1 to 5, **characterised in that** an exhaust air evacuation device (12) is arranged above the storage container (1) and the working container (2).

7. Device according to claims 1 to 6, **characterised in that** a hood (3) arranged above the storage container (1) and above the endless conveyor belt (4) is provided.

8. Device according to claims 1 to 7, **characterised in that** a container (9) for cleaning the conveyor belt is arranged in the circulating path of the endless conveyor belt (4).

9. Device according to claims 1 to 8, **characterised in that** the storage container (1) is provided with a pump over device (5) and with a recycling device (10).

## Revendications

1. Dispositif modulaire pour le traitement superficiel d'un matériau destiné au traitement (17) sous la forme de pièces détachées, en particulier de petit matériel de montage, avec un liquide de traitement, sous forme d'une installation de passage, **caractérisé par** des unités compactes modulaires aptes à être montées en série, constituées par un récipient collecteur (1) pour le liquide de traitement, par un récipient de travail (2) disposé à l'intérieur du récipient collecteur (1), par une bande transporteuse sans fin (4) pour le matériau destiné au traitement (17), qui défile au-dessus du récipient collecteur (1) et directement au-dessus du récipient de travail (2), par un ou plusieurs mécanismes d'alimentation (14, 15) disposés au-dessus et/ou en dessous de la bande transporteuse sans fin (4) pour acheminer le liquide de traitement au récipient de travail (2), et par un mécanisme de guidage (6) pour guider la bande transporteuse sans fin (4) en circuit en direction et au-dessus du récipient collecteur (1) et du récipient de travail (2) et en retour.

2. Dispositif selon la revendication 1, **caractérisé en ce que** des ustensiles de traitement (16) pour le matériau destiné au traitement (17) sont disposés dans le récipient de travail (2).

3. Dispositif selon les revendications 1 et 2, **caractérisé en ce que** le mécanisme de guidage pour la bande transporteuse sans fin (4) est réalisé sous la forme d'un mécanisme de renvoi du type à rouleaux (6).

4. Dispositif selon les revendications 1 à 3, **caractérisé en ce qu'**on prévoit un mécanisme vibratoire (7) qui fait vibrer la bande transporteuse sans fin (4) au-dessus du récipient de travail (2).

5. Dispositif selon les revendications 1 à 4, **caractérisé en ce qu'**un mécanisme de pulvérisation (15a) est disposé par-dessus le récipient de travail (2) au-dessus de la bande transporteuse sans fin (4).

6. Dispositif selon les revendications 1 à 5, **caractérisé en ce qu'**un mécanisme d'évacuation de l'air d'échappement (12) est disposé au-dessus du récipient collecteur (1) et du récipient de travail (2).

7. Dispositif selon les revendications 1 à 6, **caractérisé en ce qu'**on prévoit un capot (3) disposé par-dessus le récipient collecteur (1) au-dessus de la bande transporteuse sans fin (4).

8. Dispositif selon les revendications 1 à 7, **caractérisé en ce qu'**un récipient (9) pour le nettoyage de la bande transporteuse est disposé dans le circuit de la bande transporteuse sans fin (4).

9. Dispositif selon les revendications 1 à 8, **caractérisé en ce que** le récipient collecteur (1) est réalisé sous la forme d'un mécanisme de transvasement par pompe (5) et d'un mécanisme de recyclage (10).
